(19) Europäisches Patentamt
European Patent Office
Office européen des brevets

(11) **EP 2 316 207 B1**

(12) **FASCICULE DE BREVET EUROPEEN**

(45) Date de publication et mention
de la délivrance du brevet:
**04.12.2013 Bulletin 2013/49**

(21) Numéro de dépôt: **09769546.4**

(22) Date de dépôt: **26.06.2009**

(51) Int Cl.:
**H04L 25/02** *(2006.01)*      **H04L 25/03** *(2006.01)*
**H04L 1/00** *(2006.01)*      **H04B 7/005** *(2006.01)*

(86) Numéro de dépôt international:
**PCT/FR2009/051239**

(87) Numéro de publication internationale:
**WO 2009/156705 (30.12.2009 Gazette 2009/53)**

(54) **PROCÈDE D'ESTIMATION DE LA QUALITÉ DE FOCALISATION D'UN SIGNAL PRE-EGALISE PAR RETOURNEMENT TEMPOREL**

VERFAHREN ZUR SCHÄTZUNG DER QUALITÄT DES FOKUSSIERENS EINES VORENTZERRTEN ZEITUMKEHR-SIGNALS

METHOD FOR ESTIMATING QUALITY OF THE FOCUSING OF A TIME-REVERSAL PRE-EQUALIZED SIGNAL

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.06.2008 FR 0854360**

(43) Date de publication de la demande:
**04.05.2011 Bulletin 2011/18**

(73) Titulaire: **Orange**
**75015 Paris (FR)**

(72) Inventeurs:
• **PHAN HUY, Dinh, Thuy**
**F-75004 Paris (FR)**
• **WIART, Joe**
**F-77400 Lagny Sur Marne (FR)**
• **ZIADE, Youmni**
**F-92340 Bourg La Reine (FR)**
• **DESBAT, Jean-Philippe**
**F-75015 Paris (FR)**

(56) Documents cités:
**US-A1- 2003 138 053**

• **PATRICE PAJUSCO ET AL: "Characterization of UWB time reversal using circular array measurements" WIRELESS TECHNOLOGIES, 2007 EUROPEAN CONFERENCE ON, IEEE, PI, 1 octobre 2007 (2007-10-01), pages 102-105, XP031190917**
• **SHARMA J J ET AL: "Compensating the effects of target acceleration in dual-channel SAR-GMTI" IEE PROCEEDINGS: RADAR, SONAR & NAVIGATION, INSTITUTION OF ELECTRICAL ENGINEERS, GB, vol. 153, no. 1, 16 février 2006 (2006-02-16), pages 53-62, XP006025889 ISSN: 1350-2395**
• **GOMES J ET AL: "Time-reversed OFDM communication in underwater channels" SIGNAL PROCESSING ADVANCES IN WIRELESS COMMUNICATIONS, 2004 IEEE 5TH WORKSHOP ON LISBON, PORTUGAL 11-14 JULY 2004, PISCATAWAY, NJ, USA,IEEE, 11 juillet 2004 (2004-07-11), pages 626-630, XP010805978**
• **TOURIN A ET AL: "Time reversal telecommunications in complex environments" COMPTES RENDUS - PHYSIQUE, ELSEVIER, PARIS, FR, vol. 7, no. 7, 1 septembre 2006 (2006-09-01), pages 816-822, XP024978786 ISSN: 1631-0705 [extrait le 2006-09-01]**

**Description**

Le domaine de l'invention est celui des télécommunications et plus précisément des techniques de communication radio entre des entités communicantes.

Plus particulièrement, l'invention concerne la qualité de transmission d'un signal basé sur une technique de retournement temporel entre deux entités communicantes.

Un signal radio transmis par une antenne d'une entité communicante subit des déformations en fonction des conditions de propagation entre un point d'origine défini en sortie de l'antenne d'origine et un point destinataire défini en entrée d'une antenne de l'entité communicante destinataire. Afin de limiter ces déformations, le signal est préalablement distordu par application de coefficients de pré-égalisation en fonction des caractéristiques du canal de propagation entre ces deux antennes. Il est donc nécessaire de caractériser ce canal de propagation.

Parmi les méthodes de pré-égalisation existantes, se distinguent les méthodes basées sur le retournement temporel du fait de leur complexité réduite, de leur performance et de leur capacité intrinsèque à focaliser une onde radio sur une antenne de réception. Le retournement temporel permet de réduire significativement la dispersion temporelle du canal de propagation en focalisant l'énergie du signal reçu dans le temps et dans l'espace.

Le retournement temporel est une technique de focalisation des ondes, typiquement des ondes acoustiques, qui repose sur l'invariance par renversement du temps de l'équation d'onde. Ainsi, une onde temporellement inversée se propage comme une onde directe qui remonterait le temps. Une impulsion brève émise d'un point origine se propage dans un milieu de propagation. Une partie de cette onde reçue par un point destinataire est retournée temporellement avant d'être renvoyée dans le milieu de propagation. L'onde converge vers le point origine en y reformant une impulsion brève et l'énergie de l'onde est focalisée sur le point d'origine. Le signal, focalisé par retournement temporel sur le point-d'origine, est quasi identique dans sa forme au signal d'origine émis au point origine. Il y a ainsi recompression temporelle au point d'origine. En particulier l'onde retournée converge d'autant plus précisément que le milieu de propagation est complexe.

La technique du retournement temporel est ainsi appliquée aux réseaux de communication radio pour annuler l'effet du canal de propagation sur le signal, notamment en réduisant l'étalement du canal, et simplifier le traitement de symboles reçus après la traversée du canal. Le signal émis par une antenne de l'entité communicante d'origine est ainsi pré-égalisé par application de coefficients obtenus à partir du retournement temporel de la réponse impulsionnelle du canal de propagation que ce signal doit traverser. Le retournement temporel du canal de propagation appliqué au signal permet d'annuler l'effet de ce canal lors de la transmission du signal ainsi pré-distordu à partir du point d'origine, et de focaliser le signal sur une antenne destinataire. La mise en oeuvre du retournement temporel nécessite ainsi la connaissance du canal de propagation par l'entité communicante d'origine.

L'article de P. Pajusco et P. Pagani intitulé « *Characterization of UWB time reversal using circular array measurements* » décrit des mesures, au niveau de récepteurs distribués dans un plan, de la puissance d'un signal radio à bande ultra-large pré-égalisé par retournement temporel. L'analyse de ces mesures met en valeur les effets de focalisation temporelle et de focalisation spatiale obtenus par cette technique de pré-égalisation.

Cependant, lorsque les entités communicantes sont mobiles, l'estimation du canal effectuée à un instant donné par une entité communicante peut s'avérer erronée à un instant suivant du fait de la mobilité de l'une ou des deux entités communicantes. Cette erreur est qualifiée par rapport à un mouvement relatif défini en fonction de la vitesse de déplacement de l'entité communicante d'origine observée depuis l'entité communicante destinataire. Pour des mouvements relatifs importants il y a décorrélation entre l'estimée du canal de propagation, appliquée pour la pré-distorsion du signal, et le canal de propagation effectivement traversé par le signal. La focalisation du signal sur l'antenne de l'entité communicante destinataire n'est pas réalisée, et la puissance du signal reçu est inférieure à la puissance du signal qui serait reçu en l'absence de mouvement relatif.

La dé-focalisation du signal sur l'antenne destinataire est en fait engendrée par le mouvement relatif et par un délai de latence. Le délai de latence est le délai global comprenant un délai de traitement entre la mesure du canal de propagation et l'émission du signal pré-égalisé, et par un délai entre l'émission et la réception du signal pré-égalisé.

La position de l'antenne destinataire relative à l'estimation du canal de propagation appliqué au signal pré-égalisé définit un point focal. Le point focal correspond ainsi à la position de l'antenne destinataire relativement à l'antenne d'origine avant que ne s'écoule le délai de latence. En d'autres termes, le point focal correspond au point de convergence des ondes pour des entités communicantes statiques et en l'absence de délai de latence. Dans le cas d'un déplacement de l'une ou des deux entités communicantes pendant le délai de latence, l'antenne destinataire se trouve à une position qui est différente de la position du point focal relativement à l'antenne d'origine, donc le point focal n'est pas respecté.

Lorsque la focalisation du signal n'est pas réalisée, la qualité de service est dégradée. La qualité de service est par exemple le débit offert ou bien encore un taux d'erreur sur les données véhiculées par le signal. Ainsi, la qualité de service est dégradée dès que l'entité communicante destinataire et/ou l'entité communicante d'origine se déplacent. Cette dégradation augmente lorsqu'augmente le mouvement relatif de l'entité communicante d'origine par rapport à l'entité communicante destinataire, ce mouvement ayant eu lieu pendant la durée de latence. En d'autres termes, la puissance reçue sur l'antenne destinataire diminue lorsque le mouvement relatif augmente pendant la durée de latence. De plus, cette dégradation est fonction de la fréquence porteuse du signal pré-égalisé.

Il est donc nécessaire de qualifier la qualité de focalisation.

Pour atteindre cet objectif, l'invention propose un procédé d'estimation de la qualité de focalisation d'un signal pré-égalisé par retournement temporel d'un canal de propagation estimé entre une antenne d'origine d'une entité communicante d'origine et une antenne destinataire d'une entité communicante destinataire, les entités communicantes étant aptes à être en mouvement relatif. Le procédé d'estimation comporte une étape d'évaluation d'une qualité de focalisation du signal reçu sur l'antenne destinataire, par rapport à une valeur, pour un point focal, d'une représentation d'une courbe de puissance reçue en fonction d'une distance entre l'antenne destinataire et le point focal, le point focal correspondant à une position de ladite antenne destinataire relativement à ladite antenne d'origine avant que ne s'écoule un délai de latence.

Ce procédé permet ainsi d'estimer la qualité de focalisation à partir d'une exploitation des propriétés spatio-temporelles du retournement temporel pour toute fréquence du signal émis. La qualité de focalisation s'exprime ainsi relativement à la qualité maximum qui doit être atteinte en un point focal et non pas en qualité absolue qui dépend de la fréquence porteuse du signal. Le point focal correspond à la position de l'antenne destinataire relativement à l'antenne d'origine avant que ne s'écoule le délai de latence. L'estimation de la qualité de focalisation en se basant sur la position de l'antenne destinataire par rapport au point focal permet une évaluation simple et rapide de la qualité.

La représentation de la courbe de puissance reçue est une fonction décroissante de la distance entre l'antenne destinataire et le point focal.

La représentation de la courbe de puissance reçue exprime ainsi la variation de la qualité résultant du déplacement de l'une ou des deux entités communicantes pendant le délai de latence.

La qualité de focalisation est évaluée à partir d'une évaluation d'un mouvement relatif de l'entité communicante d'origine par rapport à l'entité communicante destinataire.

L'évaluation de la qualité de focalisation s'effectue ainsi simplement par évaluation de la dégradation de la qualité du signal par rapport à un déplacement de l'antenne destinataire relativement au point focal sans nécessiter la mesure de la puissance du signal reçu.

La qualité de focalisation est ainsi donnée directement par la fréquence porteuse du signal et par l'estimation du mouvement relatif de l'entité communicante d'origine par rapport à l'entité communicante destinataire.

La qualité de focalisation peut être également évaluée à partir d'une estimation d'une symétrie temporelle du signal reçu.

L'évaluation de la qualité s'effectue ainsi par des traitements sur le signal peu complexes et rapides.

La qualité de focalisation peut également être évaluée à partir d'une estimation d'une symétrie temporelle et d'une symétrie en puissance du signal reçu.

Des informations temporelles et de puissance du signal reçu sont ainsi exploitées conjointement permettant d'augmenter la précision de l'évaluation de la qualité de focalisation.

La qualité de focalisation peut être évaluée également à partir d'une estimation d'un facteur d'étalement temporel du signal reçu par l'antenne destinataire relativement à un facteur d'étalement temporel d'un signal référent au point focal, ou bien encore à partir d'une estimation d'une auto-corrélation du canal de propagation.

Ces deux évaluations de la qualité de focalisation sont peu sensibles aux erreurs de synchronisation du signal reçu par l'entité communicante destinataire. Ces deux évaluations de la qualité comportent en outre une étape de réception par l'antenne destinataire d'une impulsion émise par l'antenne d'origine. La donnée de l'impulsion reçue permet ainsi des comparaisons entre des estimations de la réponse impulsionnelle d'un canal effectuées à des instants différents et permet ainsi d'augmenter la précision de l'évaluation.

L'invention concerne également un dispositif d'estimation de la qualité de focalisation d'un signal pré-égalisé par retournement temporel d'un canal de propagation estimé entre une antenne d'origme, d'une entité communicante d'origine et une antenne destinataire d'une entité communicante destinataire, les entités communicantes étant aptes à être en mouvement relatif. Le dispositif comporte un évaluateur d'une qualité de focalisation du signal reçu sur l'antenne destinataire, par rapport à une valeur, pour un point focal, d'une représentation d'une courbe de puissance reçue en fonction d'une distance entre l'antenne destinataire et le point focal, le point focal correspondant à une position de ladite antenne destinataire relativement à l'antenne d'origine avant que ne s'écoule un délai de latence.

L'invention concerne également une entité communicante d'un système de communication radio comportant un dispositif d'estimation de la qualité de focalisation précité.

L'invention concerne également un système de communication radio comprenant au moins une entité communicante selon l'invention.

Les dispositifs, l'entité communicante et le système présentent des avantages analogues à ceux précédemment décrits.

D'autres caractéristiques et avantages de la présente invention apparaîtront plus clairement à la lecture de la description suivante de plusieurs modes particuliers de réalisation de l'invention, et des entités communicantes associées, donnés à titre de simples exemples illustratifs et non limitatifs, et des dessins annexés, sur lesquels :

- la figure 1 est un bloc-diagramme schématique d'une entité communicante d'origine communicant avec une entité communicante destinataire selon un mode de réalisation de l'invention,
- la figure 2 représente des exemples de représentations de courbes de puissances reçues en fonction d'une distance entre une antenne destinataire et un point focal,
- la figure 3 représente des exemples de représentations normalisées de courbes de puissances reçues,
- les figures 4, 5, 6, 7 et 8 représentent les étapes d'évaluation de la qualité de focalisation selon différents modes de réalisation de l'invention.

Par soucis de clarté, l'invention est présentée pour la transmission unidirectionnelle d'un signal de données d'une entité communicante EC1 à destination d'une entité communicante EC2. L'invention concerne également les transmissions bidirectionnelles et concerne également des entités communicantes comportant plusieurs antennes d'émission ou de réception.

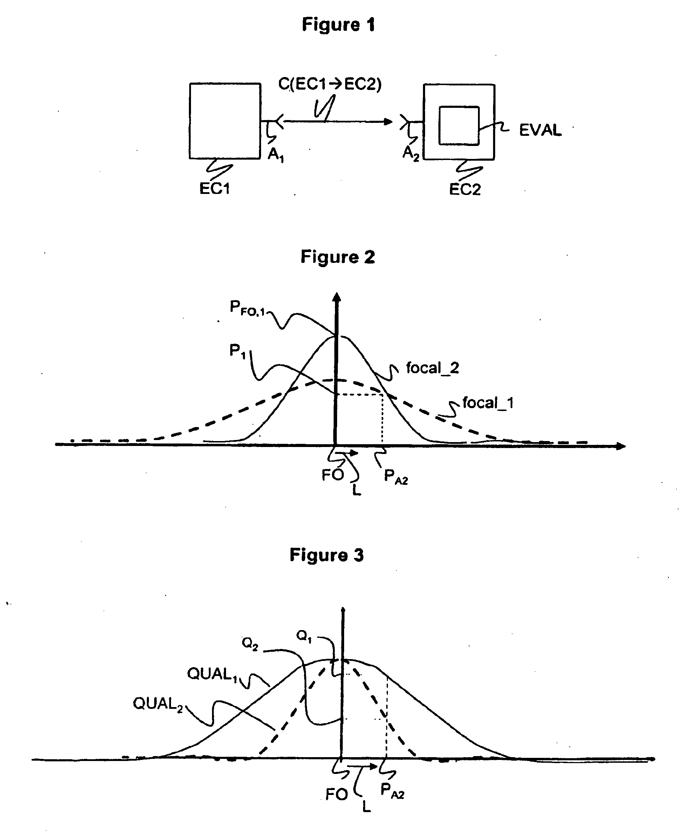

En référence à la figure 1, une entité communicante EC1 est apte à communiquer avec une entité destinataire EC2 au travers d'un réseau de communication radio non représenté sur la figure.

Par exemple, le réseau de communication radio est un réseau de radiocommunication cellulaire de type UMTS (pour "Universal Mobile Communication System" en anglais) défini par l'organisme de spécification 3GPP (pour "3rd Generation Partnership Project" en anglais), et ses évolutions dont le 3GPP-LTE (pour "Long Term Evolution" en anglais), ou bien encore un réseau de communication radio de type WIMAX (pour "Worldwide Interoperability for Microwave Access" en anglais).

Les entités communicantes peuvent être des terminaux mobiles, des stations de base terrestre ou satellitaires, des points d'accès, ou tout équipement équipé d'une carte communicante.

L'entité communicante d'origine EC1 est apte à émettre un signal de données sur une fréquence porteuse $f_p$ à partir d'une antenne $A_1$ à destination de l'entité communicante destinataire EC2.

L'entité communicante destinataire EC2 est agencée pour recevoir le signal de données, et restituer les données à partir du signal reçu sur une antenne $A_2$ de l'entité communicante destinataire.

Un signal de données est pré filtré par application de coefficients d'une réponse impulsionnelle $h_n(t)$ estimée retournée temporellement. La réponse impulsionnelle est représentative du canal de propagation C(EC1→EC2) entre l'antenne de l'entité communicante d'origine $A_1$, dite antenne d'origine, et l'antenne de l'entité communicante destinataire $A_2$, dite antenne destinataire.

Dans le cas d'une transmission en mode TDD, les transmissions dans un premier sens, par exemple de l'entité communicante d'origine EC1 vers l'entité communicante destinataire EC2, et les transmissions dans un deuxième sens, inverse du premier sens, s'effectuent sur une même fréquence porteuse à des instants différents. L'estimation de la réponse impulsionnelle du canal de propagation est classiquement réalisée par l'entité communicante d'origine EC1 à partir de l'analyse des signaux de transmission du deuxième sens.

Dans le cas d'une transmission en mode FDD, les transmissions dans le premier sens et les transmissions dans le sens inverse sont effectuées dans des bandes de fréquences distinctes. La connaissance par l'entité communicante d'origine EC1 du canal de propagation correspondant au premier sens de transmission peut être, par exemple, obtenue par la délivrance d'une estimation du canal de propagation effectuée par l'entité communicante destinataire EC2.

Selon le mode de transmission considéré, l'entité communicante d'origine EC1 ou l'entité communicante destinataire EC2 est ainsi agencée pour réaliser l'estimation d'un canal de propagation. Si cette estimation est réalisée par l'entité communicante destinataire EC2, celle-ci est apte à délivrer l'estimation à l'entité communicante d'origine, ou à délivrer des coefficients de pré-égalisation obtenus par retournement temporel de l'estimation.

Un délai de traitement est défini par l'intervalle de temps séparant la mesure du canal de propagation et l'émission du signal pré-égalisé déterminé à partir de ces mesures. Le délai de traitement auquel s'ajoute un intervalle de temps séparant l'émission et la réception du signal pré-égalisé, détermine un délai de latence $D_L$. Le délai de latence est un paramètre de configuration des entités communicantes.

Dans la figure 1 sont seulement représentés des moyens inclus dans l'entité communicante destinataire en relation avec l'invention. L'entité communicante destinataire EC2 comporte en outre une unité centrale de commande, non représentée à laquelle les moyens inclus sont reliés, destinée à contrôler le fonctionnement de ces moyens.

L'entité communicante destinataire comporte un évaluateur EVAL de la qualité de focalisation d'un signal reçu par l'antenne destinataire par rapport à une valeur, pour un point focal, d'une représentation d'une courbe de puissance reçue en fonction d'une distance entre l'antenne destinataire et un point focal.

La détermination de la représentation de la courbe de puissance reçue est décrite en relation avec les **figures 2 et 3.**

La puissance d'un signal pré-égalisé reçu sur l'antenne destinataire $A_2$ détermine la qualité du signal et ainsi une qualité de service qui peut être par exemple un débit offert ou bien encore un taux d'erreur sur les données. En l'absence de mouvement relatif ν de l'entité communicante d'origine EC1 par rapport à l'entité communicante destinataire EC2, et en l'absence de délai de latence $D_L$, la puissance d'un signal pré-égalisé par retournement temporel est maximum au point de convergence des ondes, dit point focal, qui se situe au niveau de l'antenne destinataire. Le point focal correspond ainsi à la position de l'antenne destinataire, relativement à l'antenne d'origine, avant que ne s'écoule le délai de latence.

Dès que les entités communicantes se déplacent pendant la durée de latence, le point focal n'est plus respecté. Cette transgression s'exprime en fonction du délai de latence $D_L$ et du mouvement relatif ν de l'entité communicante d'origine par rapport à l'entité communicante destinataire. La distance entre la position de l'antenne destinataire et le point focal est ainsi donné par le produit du mouvement relatif ν, par exemple sous forme d'une vitesse, et du temps de latence:

$$L = \nu \ . \ D_L \ .$$

Le mouvement relatif ν doit être compris dans la suite comme le déplacement de l'entité communicante d'origine vue de l'entité communicante destinataire.

Lorsque l'antenne destinataire est distante du point focal, par exemple pour un délai de latence non adapté ou lors d'un déplacement d'une ou des deux entités communicantes, la puissance n'est plus maximum. La **figure 2** représente ainsi deux exemples de représentation de courbe de puissance reçue en fonction d'une distance entre l'antenne destinataire et le point focal. La fonction focal_1, correspondant à l'émission d'un signal pré-égalisé émis sur une fréquence porteuse $f_1$. est maximum au point focal FO et diminue monotonement en fonction d'une distance L au point focal.

Pour une position de l'antenne destinataire $P_{A2}$ à une distance L du point focal, la puissance reçue $P_1$ est inférieure à la puissance reçue $P_{FO,1}$ au point focal.

L'étendue et la forme d'une courbe de puissance reçue est fonction du canal de propagation et notamment de la fréquence porteuse du signal. La représentation de la courbe de puissance reçue s'élargie lorsque la fréquence porteuse diminue. Ainsi, la fonction focal_1, correspondant à une fréquence $f_1$ plus basse que la fréquence porteuse $f_2$, est plus étendue que la fonction focal_2.

Les propriétés ci-dessus sont par exemples démontrées dans l'article intitulé "Signal Frequency and Bandwidth Effects on the Performance of UWB Time-Reversal Technique", dont les auteurs sont A. Khaleghi et G. El Klein présenté en 2007 lors de la conférence "Loughborough Antennas and Propagation Conference", pages 97 à 100.

Dans le cas général, la qualification de la qualité de focalisation peut s'appuyer sur une représentation de la courbe de puissance du signal reçu. Cette représentation exprime la variation de la qualité en fonction de la distance au point focal et dépend de la fréquence porteuse du signal. La représentation est telle que

- sa valeur maximum est atteinte au point focal,
- elle est monotone décroissante en fonction de la distance entre l'antenne destinataire et le point focal.

On peut également considérer une représentation dite normalisée de la courbe de puissance reçue pour laquelle la valeur maximum est identique pour toutes les fréquences porteuses. La représentation normalisée de la courbe de puissance reçue est une fonction monotone décroissante de la distance au point focal et telle que pour une distance donnée L entre l'antenne destinataire et le point focal, si $Q_1$ et $Q_2$ sont deux valeurs de qualité de focalisation pour des fréquences porteuses respectives $f_1$ et $f_2$, $f_1$ inférieure $f_2$, alors $Q_1$ est supérieure à $Q_2$. Ainsi, pour une position $P_{A2}$ de l'antenne destinataire à une distance L du point focal, la valeur de qualité de focalisation correspondant à l'émission d'un signal sur la fréquence porteuse $f_1$ est supérieure à la valeur de qualité de focalisation correspondant à l'émission d'un signal sur la fréquence porteuse $f_2$.

La figure 3 illustre des représentations normalisées de courbe de puissance reçue, la courbe $QUAL_1$ correspondant à l'émission d'un signal pré-égalisé émis sur une fréquence $f_1$, et la courbe $QUAL_2$ correspondant à l'émission d'un signal pré-égalisé émis sur une fréquence $f_2$, telle que la fréquence $f_1$ soit inférieure à la fréquence $f_2$.

Dans la suite, plusieurs modes de réalisation de l'évaluation de la qualité de focalisation sont présentés. Ces différents modes sont basés sur les propriétés spatio-temporelles de la focalisation d'un signal par retournement temporel d'une estimation de la réponse impulsionnelle $h_n(t)$. La réponse impulsionnelle $h_n(t)$ est représentative du canal de propagation C(EC1→EC2) entre l'antenne d'origine et l'antenne destinataire. La fonction de transfert de l'estimation de la réponse impulsionnelle du canal de propagation est notée $H_n(f)$.

La qualité de focalisation du signal sur l'antenne destinataire est évaluée par l'évaluateur EVAL par rapport à la valeur pour le point focal de la représentation de la courbe de puissance reçue en fonction d'une distance entre l'antenne destinataire et le point focal. Le point focal correspond à la position de l'antenne destinataire relativement à l'antenne d'origine avant que ne s'écoule le délai de latence.

Les différents modes de réalisation présentés sont respectivement basés, à partir du signal reçu sur l'antenne destinataire, sur une estimation du mouvement relatif une évaluation de la symétrie temporelle ou en puissance du signal reçu, ou bien encore une estimation de l'étalement temporel du signal reçu ou de l'auto corrélation du canal de propagation. Les différents indices de qualité sont alors déterminés, indépendamment de la position réelle du point focal qui ne nécessite pas d'être connu, et sans mesure effectuée à ce point focal.

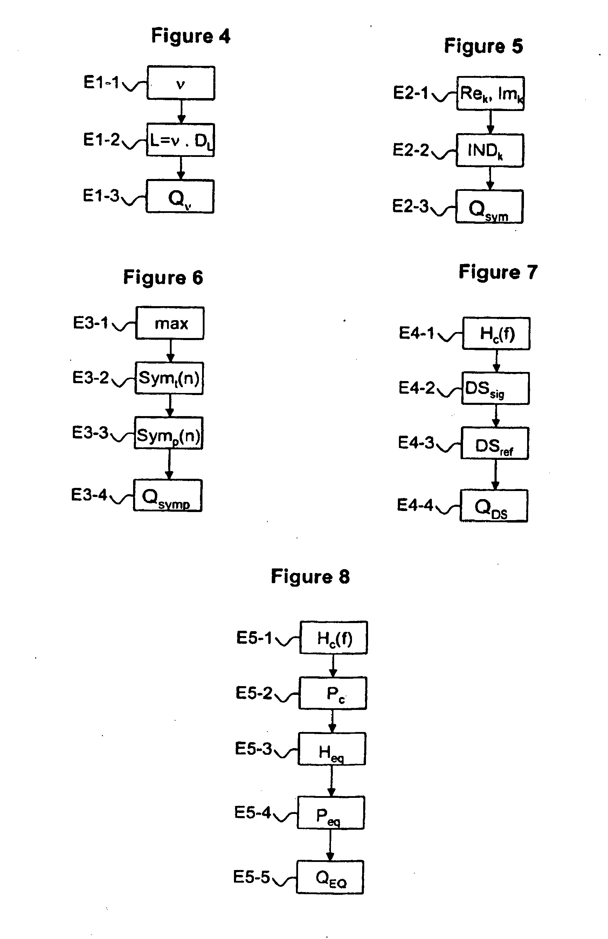

Un premier mode de réalisation de l'évaluation de la qualité de focalisation est décrit en référence à la **figure 4**. L'évaluation de la qualité de focalisation est obtenue à partir de l'estimation du mouvement relatif de l'entité communicante d'origine par rapport à l'entité communicante destinataire.

A l'étape E1-1, l'entité communicante destinataire estime le mouvement relatif $v$ de l'entité communicante d'origine. L'estimation du mouvement relatif peut par exemple être réalisée à partir d'un positionnement des entités communicantes établi à partir d'une technologie de type GPS (pour "Global Positioning System" en anglais) bien connue de l'homme du métier. A titre d'exemple non limitatif, l'article intitulé " The SMART Project - Speed Measurement Validation in Real Traffic Condition", dont les auteurs sont P. Bellucci, E. Cipriani, M. Gagliarducci and C. Riccucci, et publié dans le recueil "Proceedings of the 8th International IEEE Conference on Intelligent Transportation Systems Vienna, Austria, September 13-16, 2005, présente une méthode de mesure du mouvement relatif pour un système mobile.

A l'étape E1-2 l'entité communicante destinataire estime une distance L de l'antenne destinataire au point focal à partir du délai de latence $D_L$ et de l'estimation du mouvement relatif $v$, par exemple sous forme d'une vitesse, telle que:

$$L = v \cdot D_L.$$

A l'étape E1-3, l'entité communicante estime la qualité de focalisation $Q_v$, par rapport à la valeur au point focal de la représentation de la courbe de puissance reçue, à partir de la distance estimée au point focal. La qualité de focalisation est donnée par:

$$Q_v = \frac{(\lambda/2) - L}{(\lambda/2)},$$

où $\lambda$ est la longueur d'onde de la fréquence porteuse $f_p$ du signal pré-égalisé émis par l'antenne d'origine, et donnée par $\lambda = c/f_p$, c désignant la célérité de la lumière.

En variante, la qualité de focalisation $Q_{bessel}$ est estimée à partir de la modélisation de la courbe de puissance reçue à partir d'une fonction de Bessel d'ordre 0 donnée par:

$$Q_{Bessel} = Bessel\left(\frac{L}{\lambda}\right).$$

Un deuxième mode de réalisation de l'évaluation de la qualité de focalisation est décrit en référence à la **figure 5**. L'évaluation de la qualité de focalisation est réalisée à partir d'une estimation de la symétrie temporelle du signal reçu. Pour cela, on introduit un indice de symétrie du signal. Il est connu qu'un signal pré-égalisé par retournement temporel est parfaitement symétrique en temps au point focal. Cette symétrie n'est plus réalisée en dehors du point focal et la dissymétrie augmente avec la distance au point focal.

A l'étape E2-1, l'entité communicante effectue la transformée de Fourier discrète du signal pré-égalisé reçu par l'antenne destinataire afin d'obtenir une représentation fréquentielle du signal. Une représentation fréquentielle $S(f_k)$ du signal de données $s(t)$ reçu est complexe et composée d'une partie réelle $Re_k$ de $S(f_k)$ et d'une partie imaginaire $Im_k$ de $S(f_k)$, pour toute fréquence porteuse $f_k$ de la bande passante $B_{EC}$ totale allouée à l'entité communicante destinataire.

A l'étape E2-2, l'entité communicante destinataire évalue, pour chaque fréquence porteuse $f_k$ allouée à l'entité communicante destinataire, un indice de symétrie $IND_k$ du signal reçu donné par:

$$IND_k = \frac{Re_k{}^2}{(Re_k + Im_k)^2} \quad .$$

A l'étape E2-3, l'entité communicante détermine la qualité de focalisation $Q_{sym}$, par rapport à la valeur au point focal de la représentation de la courbe de puissance, donnée par :

$$Q_{sym} = \frac{\sum\limits_{k=1}^{N_f} IND_k}{N_f} \quad .$$

où $N_f$ désigne le nombre de fréquences porteuses allouées à l'entité communicante destinataire dans la bande $B_{EC}$.

Un troisième mode de réalisation de l'évaluation de la qualité de focalisation est décrit en référence à la **figure 6**. L'évaluation de la qualité de focalisation est réalisée à partir d'une estimation de la symétrie temporelle et de la symétrie en puissance du signal reçu. En effet, une dissymétrie temporelle mesurée à un instant $t_{max}$, le temps $t_{max}$ correspondant à l'instant pour lequel l'énergie du signal est concentrée, doit avoir une influence plus importante sur la qualité qu'une dissymétrie mesurée à un autre instant. En d'autres termes, une dissymétrie à un instant donné est plus influente sur la dissymétrie globale du signal quand l'énergie du signal est plus grande en ce point.

L'évaluation de la qualité de focalisation est réalisée à partir du signal temporel reçu échantillonné dont un échantillon à un instant $t_n$ est noté $s(t_n)$.

A l'étape E3-1, l'entité communicante détermine l'indice noté max tel que la valeur de l'échantillon $s(t_{max})$ du signal soit maximum.

A l'étape E3-2, l'entité communicante détermine N valeurs de symétrie temporelle $Sym_t(n)$ du signal reçu pour différents écarts temporels par rapport à l'échantillon du signal à l'instant $t_{max}$ déterminé lors de l'étape E3-1:

$$Sym_t(n) = \frac{\left| s(t_{max} + t_{n+max}) - s(t_{max} - t_{n+max}) \right| / \sqrt{E}}{\left( t_{n+max} - t_{max} \right) / \tau}$$

où E est l'énergie du signal reçu, et $\tau$ le facteur d'étalement temporel estimé du signal reçu.

Le nombre N de valeurs de symétrie est un paramètre configurable de l'entité communicante destinataire, la précision sur l'évaluation de la qualité étant croissante avec N.

Le facteur d'étalement temporel $\tau$ peut être évalué par exemple selon la méthode présentée dans l'article "Delay Spread Estimation for Wireless Communication Systems", dont les auteurs sont Hüseyin Arslan and Tevfik Yücek, et publié en 2003 dans la revue "Proceedings of the Eighth IEEE International Symposium on Computers and Communications".

A l'étape E3-3, l'entité communicante détermine N valeurs de symétrie $Sym_p(n)$ de la puissance du signal reçu pour différents écarts temporels par rapport à l'échantillon du signal à l'instant $t_{max}$ déterminé lors de l'étape E3-1 :

$$Sym_p(n) = \frac{\left[ \sqrt{\left| s(t_{max} + t_{n+max}) \right|^2} + \left| s(t_{max} - t_{n+max}) \right|^2 \right] / \sqrt{E}}{2 \left( t_{n+max} - t_{max} \right) / \tau}$$

A l'étape E3-4, l'entité communicante détermine la qualité de focalisation $Q_{symp}$, par rapport à la valeur au point focal de la représentation de la courbe de puissance reçue, donnée par :

$$Q_{symp} = \frac{1}{N} \sum_{n=1}^{N} \frac{\left(\pi^2/4\right) - \left[atan(Sym_t(n)) \cdot atan(Sym_p(n))\right]}{\pi^2/4}$$

où atan désigne l'opérateur arc tangente.

Un quatrième mode de réalisation de l'évaluation de la qualité de focalisation est décrit en référence à la **figure 7**. L'évaluation de qualité de focalisation est réalisée à partir de l'estimation d'un facteur d'étalement temporel du signal reçu relativement à l'étalement temporel d'un signal référent au point focal. Le facteur d'étalement temporel d'un signal est également communément mentionné dans la littérature par le terme anglais correspondant "delay spread".

Une propriété du facteur d'étalement est sa décroissance avec la distance au point focal ainsi que démontré dans l'article intitulé " Characterization of Space-Time Focusing in Time-Reversed Random Fields" dont les auteurs sont Claude Oestges, Arnold D. Kim, George Papanicolaou, and Arogyaswami J. Paulraj, et publié dans la revue IEEE Transactions on Antennas and Propagation, vol 53, january 2005.

A l'étape E4-1, l'entité communicante d'origine émet une impulsion à destination de l'entité communicante destinataire. Cette dernière reçoit ainsi une réponse impulsionnelle $h_c(t)$ du canal de propagation entre l'entité d'origine et l'entité destinataire, ou de façon équivalente la fonction de transfert du canal de propagation $H_c(f)$.

A l'étape E4-2, l'entité communicante destinataire mesure le facteur d'étalement temporel $DS_{sig}$ du signal reçu. Cette mesure est par exemple réalisée selon la méthode présentée dans l'article "Delay Spread Estimation for Wireless Communication Systems", dont les auteurs sont Hüseyin Arslan and Tevfik Yücek, et publié en 2003 dans la revue "Proceedings of the Eighth IEEE International Symposium on Computers and Communications".

A l'étape E4-3, l'entité communicante destinataire évalue le facteur d'étalement temporel $DS_{ref}$ d'un signal référent ref(t). Le signal référent ref(t) est construit à partir de l'impulsion reçue lors de l'étape E4-1 à laquelle est appliqué le retournement temporel de l'estimation de la réponse impulsionnelle du canal de propagation $h_n(t)$ utilisée pour la pré-égalisation du signal. Dans le domaine fréquentiel, le signal référent est ainsi donné par:

$$REF(f) = H_n(f)^* H_c(f).$$

A l'étape E4-4, l'entité communicante détermine la qualité de focalisation $Q_{DS}$, par rapport à la valeur au point focal de la représentation de la courbe de puissance reçue, donnée par :

$$Q_{DS} = \frac{DS_{ref}}{DS_{sig}}.$$

Un cinquième mode de réalisation de l'évaluation de la qualité de focalisation est décrit en référence à la figure 8. L'évaluation de la qualité de focalisation est réalisée à partir d'un rapport entre la puissance du signal reçu et la puissance d'un signal référent. Ce rapport de puissance est représentatif d'une estimation de l'auto corrélation du canal de propagation.

A l'étape E5-1, l'entité communicante d'origine émet une impulsion ou un signal pilote à destination de l'entité communicante destinataire. Cette dernière estime une réponse impulsionnelle $h_c(t)$ du canal de propagation entre l'entité communicante d'origine et l'entité communicante destinataire, ou de façon équivalente la fonction de transfert du canal de propagation $H_c(f)$.

A l'étape E5-2, l'entité communicante destinataire détermine la puissance du canal de propagation. Par exemple la puissance du canal de propagation $P_c$ est évaluée relativement à la bande passante B du signal et à la taille W(B) de la bande passante selon toute méthode d'évaluation de puissance bien connue de l'homme du métier :

$$P_c = \frac{1}{W(B)} \int_{f \in B} \left\| H_c(f) * \times H_c(f) \right\|^2$$

A l'étape E5-3, l'entité communicante destinataire démodule le signal pré-égalisé reçu sur l'antenne destinataire, et estime le canal de propagation équivalent $H_{eq}(f)$ donné par le produit du conjugué de la fonction de transfert du canal de propagation $H_n(f)$ et de la fonction de transfert $H_c(t)$ :

$$H_{eq}(f) = H_n(f) * \quad H_c(f),$$

la fonction de transfert $H_n(f)$ correspondant à la réponse impulsionnelle $h_n(t)$ utilisée pour la pré-égalisation du signal émis.
A l'étape E5-4, l'entité communicante détermine la puissance du canal équivalent $P_{eq}$. Par exemple, la puissance du canal équivalent est évaluée relativement à la bande passante B du signal et à la taille W(B) de la bande passante:

$$P_{eq} = \frac{1}{W(B)} \int_{f \in B} \left\| Heq(f) \right\|^2$$

A l'étape E5-5, l'entité communicante destinataire détermine la qualité de focalisation $Q_{EQ}$, par rapport à la valeur au point focal de la représentation de la courbe de puissance reçue, donnée par :

$$Q_{EQ} = \frac{\left\| P_{eq} \right\|^2}{\left\| P_c \right\|^2}$$

En variante, l'évaluation de la qualité de focalisation est obtenue par une combinaison des différentes mesures précédemment décrites. Ainsi, considérant les évaluations $Q_v$, $Q_{Bessel}$, $Q_{sym}$, $Q_{symp}$, $Q_{DS}$, $Q_{EQ}$, respectivement définies à partir du mouvement relatif et de la longueur d'onde, du mouvement relatif et une fonction de Bessel, de l'estimation de la symétrie temporelle du signal reçu, de l'estimation de la symétrie en temps et en puissance, du facteur d'étalement temporel, et de l'auto corrélation du canal, la qualité de focalisation est obtenue par application d'une fonction combinatoire des évaluations $Q_v$, $Q_{Bessel}$, $Q_{sym}$, $Q_{symp}$, $Q_{DS}$, et $Q_{EQ}$, monotone croissante.
L'invention décrite ici concerne un dispositif d'estimation de la qualité de focalisation et mis en oeuvre dans une entité communicante. En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter celles des étapes du procédé selon l'invention mises en oeuvre dans l'entité communicante destinataire.

**Revendications**

1. Procédé d'estimation de la qualité de focalisation d'un signal pré-égalisé par retournement temporel d'un canal de propagation estimé entre une antenne d'origine ($A_1$) d'une entité communicante d'origine (EC1) et une antenne destinataire ($A_2$) d'une entité communicante destinataire (EC2), les dites entités communicantes étant aptes à être en mouvement relatif,
ledit procédé étant **caractérisé en ce qu'**il comporte une étape d'évaluation d'une qualité de focalisation ($Q_v$, $Q_{Bessel}$, $Q_v$, $Q_{sym}$, $Q_{symp}$, $Q_{DS}$, $Q_{EQ}$) du signal reçu sur l'antenne destinataire, par rapport à une valeur, pour un point focal (FO), d'une représentation (QUAL$_1$, QUAL$_2$) d'une courbe de puissance reçue en fonction d'une distance (L) entre l'antenne destinataire et le point focal, ledit point focal correspondant à une position de ladite antenne destinataire relativement à ladite antenne d'origine avant que ne s'écoule un délai de latence.

2. Procédé selon la revendication 1, dans lequel la représentation de la courbe de puissance reçue est une fonction décroissante de la distance entre l'antenne destinataire et le point focal.

3. Procédé selon la revendication 1 ou 2, dans lequel la qualité de focalisation (Q$_v$, Q$_{Bessel}$) est évaluée à partir d'une évaluation d'un mouvement relatif (v) de l'entité communicante d'origine par rapport à l'entité communicante destinataire.

4. Procédé selon la revendication 1 ou 2, dans lequel la qualité de localisation (Q$_{sym}$) est évaluée à partir d'une estimation d'une symétrie temporelle du signal reçu.

5. Procédé selon la revendication 1 ou 2, dans lequel la qualité de focalisation (Q$_{symp}$) est évaluée à partir d'une estimation d'une symétrie temporelle et d'une symétrie en puissance du signal reçu.

6. Procédé selon la revendication 1 ou 2, dans lequel la qualité de focalisation (Q$_{DS}$) est évaluée à partir d'une estimation d'un facteur d'étalement temporel du signal reçu par l'antenne destinataire relativement à un facteur d'étalement temporel d'un signal référent au point focal.

7. Procédé selon la revendication 1 ou 2, dans lequel la qualité de focalisation (Q$_{EQ}$) est évaluée à partir d'une estimation d'une auto-corrélation du canal de propagation.

8. Procédé selon l'une quelconque des revendications 6 à 7, dans lequel l'évaluation de la qualité de focalisation comporte en outre une étape de réception par l'antenne destinataire d'une impulsion émise par l'antenne d'origine.

9. Dispositif d'estimation de la qualité de focalisation d'un signal pré-égalisé par retournement temporel d'un canal de propagation estimé entre une antenne d'origine (A$_1$) d'une entité communicante d'origine (EC1) et une antenne destinataire (A$_2$) d'une entité communicante destinataire (EC2), lesdites entités communicantes étant apte à être en mouvement relatif,
le dit dispositif étant **caractérisé en ce qu'**il comporte un évaluateur (EVAL) d'une qualité de focalisation (Q$_v$, Q$_{Bessel}$, Q$_v$, Q$_{sym}$, Q$_{symp}$, Q$_{DS}$, Q$_{EQ}$) du signal reçu sur l'antenne destinataire, par rapport à une valeur, pour un point focal (FO), d'une représentation (QUAL$_1$, QUAL$_2$) d'une courbe de puissance reçue en fonction d'une distance (L) entre l'antenne destinataire et le point focal, ledit point focal correspondant à une position de ladite antenne destinataire relativement à ladite antenne d'origine avant que ne s'écoule un délai de latence.

10. Entité communicante d'un système de communication radio comportant un dispositif selon la revendication 9.

11. Système de communication radio comportant au moins une entité communicante selon la revendication 10.

12. Programme d'ordinateur pour une entité communicante comprenant les instructions logicielles pour commander la mise en oeuvre par ladite entité de celles des étapes du procédé selon l'une quelconque des revendications 1 à 8 lorsque le programme est exécuté par l'entité communicante.

**Patentansprüche**

1. Verfahren zur Schätzung der Qualität des Fokussierens eines vorentzerrten Zeitumkehrsignals eines geschätzten Übertragungskanals zwischen einer Ursprungsantenne (A$_1$) einer kommunizierenden Ursprungseinheit (EC1) und einer Zielantenne (A$_2$) einer kommunizierenden Zieleinheit (EC2), wobei die kommunizierenden Einheiten geeignet sind, in Bewegung zueinander zu sein,
wobei das Verfahren **dadurch gekennzeichnet ist, dass** es einen Bewertungsschritt einer Fokussierungsqualität (Q$_v$, Q$_{Bessel}$, Q$_v$, Q$_{sym}$, Q$_{symp}$, Q$_{DS}$, Q$_{EQ}$) des auf der Zielantenne empfangenen Signals im Vergleich zu einem Wert aufweist, für einen Fokussierungspunkt (FO), einer Darstellung (QUAL$_1$, QUAL$_2$) einer Kurve der empfangenen Leistung in Abhängigkeit von einer Entfernung (L) zwischen der Zielantenne und dem Fokussierungspunkt, wobei der Fokussierungspunkt einer Position der Zielantenne in Bezug zu der Ursprungsantenne vor dem Verstreichen einer Latenzfrist entspricht.

**2.** Verfahren nach Anspruch 1, bei dem die Darstellung der Kurve der empfangenen Leistung eine abnehmende Funktion der Entfernung zwischen der Zielantenne und dem Fokussierungspunkt ist.

**3.** Verfahren nach Anspruch 1 oder 2, bei dem die Fokussierungsqualität ($Q_v$, $Q_{Bessel}$) ausgehend von einer Bewertung einer relativen Bewegung (v) der kommunizierenden Ursprungseinheit in Bezug zu der kommunizierenden Zieleinheit bewertet wird.

**4.** Verfahren nach Anspruch 1 oder 2, bei dem die Fokussierungsqualität ($Q_{sym}$) ausgehend von einer Schätzung einer zeitlichen Symmetrie des empfangenen Signals bewertet wird.

**5.** Verfahren nach Anspruch 1 oder 2, bei dem die Fokussierungsqualität ($Q_{symp}$) ausgehend von einer Schätzung einer zeitlichen Symmetrie und einer Leistungssymmetrie des empfangenen Signals bewertet wird.

**6.** Verfahren nach Anspruch 1 oder 2, bei dem die Fokussierungsqualität ($Q_{DS}$) ausgehend von einer Schätzung eines zeitlichen Spreizfaktors des von der Zielantenne empfangenen Signals im Vergleich zu einem zeitlichen Spreizfaktor eines Bezugssignals am Fokussierungspunkt bewertet wird.

**7.** Verfahren nach Anspruch 1 oder 2, bei dem die Fokussierungsqualität ($Q_{EQ}$) ausgehend von einer Schätzung einer Autokorrelation des Übertragungskanals bewertet wird.

**8.** Verfahren nach einem der Ansprüche 6 bis 7, bei dem die Bewertung der Fokussierungsqualität ferner einen Schritt des Empfangs durch die Zielantenne eines von der Ursprungsantenne gesendeten Impulses aufweist.

**9.** Vorrichtung zur Schätzung der Qualität des Fokussierens eines vorentzerrten Zeitumkehrsignals eines geschätzten Übertragungskanals zwischen einer Ursprungsantenne ($A_1$) einer kommunizierenden Ursprungseinheit (EC1) und einer Zielantenne ($A_2$) einer kommunizierenden Zieleinheit (EC2), wobei die kommunizierenden Einheiten geeignet sind, in Bewegung zueinander zu sein,
wobei die Vorrichtung **dadurch gekennzeichnet ist, dass** sie eine Bewertungsvorrichtung (EVAL) einer Fokussierungsqualität ($Q_v$, $Q_{Bessel}$, $Q_v$, $Q_{sym}$, $Q_{symp}$, $Q_{DS}$, $Q_{ED}$) des auf der Zielantenne empfangenen Signals im Vergleich zu einem Wert aufweist, für einen Fokussierungspunkt (FO), einer Darstellung ($QUAL_1$, $QUAL_2$) einer Kurve der empfangenen Leistung in Abhängigkeit von einer Entfernung (L) zwischen der Zielantenne und dem Fokussierungspunkt, wobei der Fokussierungspunkt einer Position der Zielantenne in Bezug zu der Ursprungsantenne vor dem Ablaufen einer Latenzfrist entspricht.

**10.** Kommunizierende Einheit eines Funkkommunikationssystems, die eine Vorrichtung nach Anspruch 9 aufweist.

**11.** Funkkommunikationssystem, das mindestens eine kommunizierende Einheit nach Anspruch 10 aufweist.

**12.** Computerprogramm für eine kommunizierende Einheit, das Softwareanweisungen aufweist, um das Umsetzen durch die Einheit derjenigen der Schritte des Verfahrens gemäß einem der Ansprüche 1 bis 8 zu steuern, wenn das Programm von der kommunizierenden Einheit ausgeführt wird.

**Claims**

**1.** Method for estimating the focusing quality of a time-reversal pre-equalized signal of an estimated propagation channel between a source antenna ($A_1$) of a source communicating entity (EC1) and a destination antenna ($A_2$) of a destination communicating entity (EC2), said communicating entities being likely to be in relative motion,
said method being **characterized in that** it comprises a step of evaluation of a focusing quality ($Q_v$, $Q_{Bessel}$, $Q_v$, $Q_{sym}$, $Q_{symp}$, $Q_{DS}$, $Q_{EQ}$) of the signal received on the destination antenna, relative to a value, for a focal point (FO), of a representation ($QUAL_1$, $QUAL_2$) of a curve of received power as a function of a distance (L) between the destination antenna and the focal point, said focal point corresponding to a position of said destination antenna relative to said source antenna before a latency delay elapses.

**2.** Method according to Claim 1, in which the representation of the curve of received power is a decreasing function of the distance between the destination antenna and the focal point.

**3.** Method according to Claim 1 or 2, in which the focusing quality ($Q_v$, $Q_{Bessel}$) is evaluated from an evaluation of a relative motion (v) of the source communicating entity relative to the destination communicating entity.

4. Method according to Claim 1 or 2, in which the focusing quality ($Q_{sym}$) is evaluated from an estimation of a time symmetry of the received signal.

5. Method according to Claim 1 or 2, in which the focusing quality ($Q_{symp}$) is evaluated from an estimation of a time symmetry and of a power symmetry of the received signal.

6. Method according to Claim 1 or 2, in which the focusing quality ($Q_{DS}$) is evaluated from an estimation of a time spread factor of the signal received by the destination antenna relative to a time spread factor of a reference signal at the focal point.

7. Method according to Claim 1 or 2, in which the focusing quality ($Q_{EQ}$) is evaluated from an estimation of a self-correlation of the propagation channel.

8. Method according to either one of Claims 6 to 7, in which the evaluation of the focusing quality also comprises a step of reception by the destination antenna of a pulse transmitted by the source antenna.

9. Device for estimating the focusing quality of a time-reversal pre-equalized signal of an estimated propagation channel between a source antenna ($A_1$) of a source communicating entity (EC1) and a destination antenna ($A_2$) of a destination communicating entity (EC2), said communicating entities being likely to be in relative motion, said device being **characterized in that** it comprises an evaluator (EVAL) of a focusing quality ($Q_v$, $Q_{Bessel}$, $Q_v$, $Q_{sym}$, $Q_{symp}$, $Q_{DS}$, $Q_{EQ}$) of the signal received on the destination antenna, relative to a value, for a focal point (FO), of a representation ($QUAL_1$, $QUAL_2$) of a curve of received power as a function of a distance (L) between the destination antenna and the focal point, said focal point corresponding to a position of said destination antenna relative to said source antenna before a latency delay elapses.

10. Communicating entity of a radio communication system comprising a device according to Claim 9.

11. Radio communication system comprising at least one communicating entity according to Claim 10.

12. Computer program for a communicating entity comprising the software instructions for controlling the implementation by said entity of those of the steps of the method according to any one of Claims 1 to 8, when the program is run by the communicating entity.

## Figure 1

## Figure 2

## Figure 3

**Figure 4**

E1-1 — $v$

E1-2 — $L = v \cdot D_L$

E1-3 — $Q_v$

**Figure 5**

E2-1 — $Re_k, Im_k$

E2-2 — $IND_k$

E2-3 — $Q_{sym}$

**Figure 6**

E3-1 — max

E3-2 — $Sym_t(n)$

E3-3 — $Sym_p(n)$

E3-4 — $Q_{symp}$

**Figure 7**

E4-1 — $H_c(f)$

E4-2 — $DS_{sig}$

E4-3 — $DS_{ref}$

E4-4 — $Q_{DS}$

**Figure 8**

E5-1 — $H_c(f)$

E5-2 — $P_c$

E5-3 — $H_{eq}$

E5-4 — $P_{eq}$

E5-5 — $Q_{EQ}$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. KHALEGHI ; G. EL KLEIN.** Signal Frequency and Bandwidth Effects on the Performance of UWB Time-Reversal Technique. *Loughborough Antennas and Propagation Conference,* 2007, 97-100
- *Global Positioning System*
- **P. BELLUCCI ; E. CIPRIANI ; M. GAGLIARDUCCI ; C. RICCUCCI.** The SMART Project - Speed Measurement Validation in Real Traffic Condition. *Proceedings of the 8th International IEEE Conference on Intelligent Transportation Systems Vienna, Austria,* 13 Septembre 2005
- **HÜSEYIN ARSLAN ; TEVFIK YÜCEK.** Delay Spread Estimation for Wireless Communication Systems. *Proceedings of the Eighth IEEE International Symposium on Computers and Communications,* 2003
- **CLAUDE OESTGES ; ARNOLD D. KIM ; GEORGE PAPANICOLAOU ; AROGYASWAMI J. PAULRAJ.** Characterization of Space-Time Focusing in Time-Reversed Random Fields. *IEEE Transactions on Antennas and Propagation,* Janvier 2005, vol. 53
- **HÜSEYIN ARSLAN ; D TEVFIK YÜCEK.** Delay Spread Estimation for Wireless Communication Systems. *Proceedings of the Eighth IEEE International Symposium on Computers and Communications,* 2003